(19) **Europäisches Patentamt**
**European Patent Office**
**Office européen des brevets**

(11) **EP 2 485 441 B1**

(12) **EUROPEAN PATENT SPECIFICATION**

(45) Date of publication and mention
of the grant of the patent:
**08.10.2014 Bulletin 2014/41**

(21) Application number: **11290068.3**

(22) Date of filing: **31.01.2011**

(51) Int Cl.:
*H04L 12/801* (2013.01)     *H04L 12/853* (2013.01)
*H04L 12/825* (2013.01)     *H04L 12/835* (2013.01)
*H04N 21/2343* (2011.01)   *H04N 21/61* (2011.01)
*H04N 21/63* (2011.01)     *H04N 21/643* (2011.01)
*H04L 29/06* (2006.01)

(54) **A video packet scheduling method for multimedia streaming**

Planungsverfahren zum Multimedia-Streaming eines Videopakets

Procédé de programmation de paquet vidéo et flux multimédia

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.08.2012 Bulletin 2012/32**

(73) Proprietor: **ALCATEL LUCENT
92100 Boulogne-Billancourt (FR)**

(72) Inventors:
• **Changuel, Nesrine
91620 Nozay (FR)**
• **Sayadi, Bessem
91620 Nozay (FR)**
• **Kieffer, Michel
92340 Bourg la Reine (FR)**

(74) Representative: **Therias, Philippe
Alcatel-Lucent International
148/152 route de la Reine
92100 Boulogne-Billancourt (FR)**

(56) References cited:
**WO-A2-02/25951      US-A1- 2002 094 031
US-A1- 2006 095 943**

• **N. changuel, N. Matronarde, M. va der Schaar, B. Sayadi, M. Kieffer: "End-to-end stochastic scheduling of scalable video overtime-varying channels", Proceedings of MM10, International Conference on Multimedia, Florence, Italy, 25 October 2010 (2010-10-25), 29 October 2010 (2010-10-29), pages 731-734, XP002634889, New York, NY, USA DOI: 10.1145/1873951.1874064 ISBN: 978-1-60558-933-6 Retrieved from the Internet: URL:http://hal.archives-ouvertes.fr/ docs/0 0/54/92/44/PDF/ACM2010_short.pdf [retrieved on 2011-05-02]**
• **GUENTHER LIEBL ET AL: "Proxy-based transmission strategies for wireless video streaming", PACKET VIDEO 2007, IEEE, PI, 1 November 2007 (2007-11-01), pages 201-210, XP031170615, ISBN: 978-1-4244-0980-8**
• **HARATCHEREV I ET AL: "Fast 802.11 link adaptation for real-time video streaming by cross-layer signaling", CONFERENCE PROCEEDINGS / IEEE INTERNATIONAL SYMPOSIUM ON CIRCUITS AND SYSTEMS (ISCAS) : MAY 23 - 26, 2005, INTERNATIONAL CONFERENCE CENTER, KOBE, JAPAN, IEEE SERVICE CENTER, PISCATAWAY, NJ, 23 May 2005 (2005-05-23), pages 3523-3526, XP010816285, DOI: DOI:10.1109/ISCAS. 2005.1465389 ISBN: 978-0-7803-8834-5**
• **NESRINE CHANGUEL ET AL: "Joint Encoder and Buffer Control for Statistical Multiplexing of Multimedia Contents", GLOBECOM 2010, 2010 IEEE GLOBAL TELECOMMUNICATIONS CONFERENCE, IEEE, PISCATAWAY, NJ, USA, 6 December 2010 (2010-12-06), pages 1-6, XP031846011, ISBN: 978-1-4244-5636-9**

**Description**

FIELD OF THE INVENTION

This invention relates generally to the technical field of multimedia streaming over wired and wireless networks.

BACKGROUND OF THE INVENTION

Multimedia applications (such as mobile television, video on demand, IPTV, video conference, digital video broadcasting (DVB), audio/video streaming, two-way video telephony, real-time gaming and the like) are as ever gaining popularity and acceptance, especially among mobile users. Such development is mainly due to wireless networks which, extended to the existing wired infrastructure, offer mobility and portability conveniences for the end-user. Hence, a great attention is paid for Quality of Service (QoS) requirements satisfaction with the purpose of an unconditional adoption of multimedia applications.

Nevertheless, multimedia data transmission particularly experiences multiple constrains that severely limit the QoS intended to be offered to end-users. These constrains have mainly to do with several key requirements with regard to the particular nature of multimedia applications - when compared to other kind of applications - that need to be satisfied so as to provide a reliable and efficient transmission:

- easy adaptability to bandwidth variations with regard to the demand for high data transmission rate (bandwidth-consuming applications);
- robustness to data loss with regard to the sensitiveness of multimedia applications to packets delays (latency and jitter) and/or the tolerance to packet losses (packet-loss tolerant applications).

Moreover, apart from the bandwidth scarcity due to an increased number of users, multimedia delivery to wireless receivers is particularly challenging

- to time-varying characteristics of wireless channels (such as error-rate and bandwidth); and
- to delivery delay constraints of some multimedia applications, especially real-time ones such as video conference, two-way video telephony, or mobile television.

To address these problems, various error-control strategies based on the employment of a feedback mechanism, i.e. from the receiver to the source, have been proposed. This feedback mechanism is in charge of conveying information regarding the path characteristics and receiver behavior (estimated at the receiver) to the transmitter (i.e. the source). For doing so, the receiver sends channel quality measurements (the available bandwidth, the status of stream path, the loss rate for example) toward the source. A common technique implementing this feature is to use, for example,

- applicative feedbacks (i.e. originating from the application layer) like RTCP messages; or
- Medium Access (MAC) layer forward error correction.

Reported network information is then utilized by the source to optimize the transport of multimedia streams (rate adaptation, transcoding, packet drop, frame drop, or layer drop in case of scalable stream) such as a RTCP-based traffic-encoding adjustment at the application layer.

In recent bibliography, different proposals of cross-layer approaches utilizing these feedbacks can be found. These approaches aim to coordinate and optimize, jointly or separately, layers performances by adapting theirs behaviors to constantly varying reported feedbacks.

But on another hand, one can mention that

- as it is stated in the RFC, applicative feedbacks occupy a non-negligible part (5%) of the bandwidth that is initially intended to be allocated to multimedia content transmission. Accordingly, feedback messages come compete to share, with the multimedia stream, the already scarce bandwidth;
- these feedbacks do not provide immediate information about the status of the stream path, and are usually obtained with a variable delay. For example, when considering unicast applications, various types of feedback from the receiver may be obtained, for example at

the application layer via RTCP feedback to get information about the level of buffers at application layer or at MAC layer via HARQ ACK/NACK (S. Sesia, I. Toufik, and M. Baker, LTE, The UMTS Long Term Evolution: From Theory to Practice, chapter 17, Feb. 2009) to get information about the channel conditions. A major problem, here, is that, with such control schemes, feedback comes with delay. This delay may be of the order of tens to hundreds of milliseconds for HARQ ACK/NACK messages to one or several seconds for RTCP packets, which may cause stability problems. Obviously, the presence of this delay is independent from the RTCP mode (immediate feedback mode, early RTCP mode, or regular RTCP mode for example).

A further problem is about the complexity of feedbacks management between a mobile receiver and the source of the multimedia application.

N. Changuel, N. Matronarde, M. va der Schaar, B. Sayadi, M. Kieffer: "End-to-End stochastic scheduling of scalable video overtime-varying channels", Proceedings of MM10, International Conference on Multimedia, Florence, Italy, 25. October 2010, pages 731-734, describes stochastic scheduling schemes for scalable video. US2006/095943 describes a packet scheduling scheme for video transmission with sender queue control. Haratcherev I et al.: "Fast 802.11 link adaptation for real-time video streaming by cross-layer signaling" Conference Proceedings / International Symposium on Circuits and Systems (ISCAS), May 23-26, 2005, Kobe, Japan, describes a link adaption scheme for video streaming. Nesrine Changuel et al.: "Joint encoder and Buffer Control for Statistical Multiplexing of Multimedia Contents", Globecom 2010, 2010, Piscataway, NJ, USA, 6.December 2010, pages 1-6, describes a joint encoder and buffer control scheme.

One object of the present invention is to improve end-user QoS in multimedia applications without using feedbacks messages from the receiver.

Another object of the present invention is to ensure reliable transport of multimedia stream using feedback from the MAC layer.

Another object of the present invention is to get rid of the applicative feedbacks (e.g. RTCP).

Another object of the present invention is to estimate the channel condition in a time varying channel without applicative feedbacks.

Another object of the present invention is to effectively use the bandwidth allocated for the transmission, over wired and wireless networks, of a real-time multimedia application.

Another object of the present invention is to enable the derivation of the desired QoS metrics without using applicative feedbacks.

Another object of the present invention is to provide a channel-adaptive source coding and error-control schemes without using applicative feedbacks.

Another object of the present invention is to provide a channel-adaptive source coding and error-control schemes that cope with bandwidth variations and data losses.

Another object of the present invention is to provide improved QoS for multimedia applications over a variety of channel conditions.

Another object of the present invention is to control data-encoding rate without using applicative feedbacks.

Another object of the present invention is to provide a mechanism that can improve the QoS of real-time multimedia applications over wireless networks.

Another object of the present invention is to provide a method targeting at mitigating delay and packet loss ratio during the transmission of multimedia data over wired and/or wireless networks.

DESCRIPTION OF THE DRAWING

The objects, advantages and other features of the present invention will become more apparent from the following disclosure and claims. The following non-restrictive description of preferred embodiments is given for the purpose of exemplification only with reference to the accompanying drawing in which

- figure 1 is a block diagram illustrating a functional embodiment; and
- figure 2 shows illustrative simulation results.

SUMMARY OF THE INVENTION

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key of critical elements of the invention or to delineate the scope of the invention. Its sole purpose is to present some concepts in a simplified form as a prelude to the more detailed description that is discussed later.

The present invention relates to a video packets scheduling method according to claim 1.

The present invention further relates to a controller according to claim 3.

The present invention further relates to a computer program product according to claim 5.

While the invention is susceptible to various modification and alternative forms, specific embodiments thereof have been shown by way of example in the drawings. It should be understood, however, that the description herein of specific embodiments is not intended to limit the invention to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

DETAILED DESCRIPTION OF ILLUSTRATIVE EMBODIMENTS

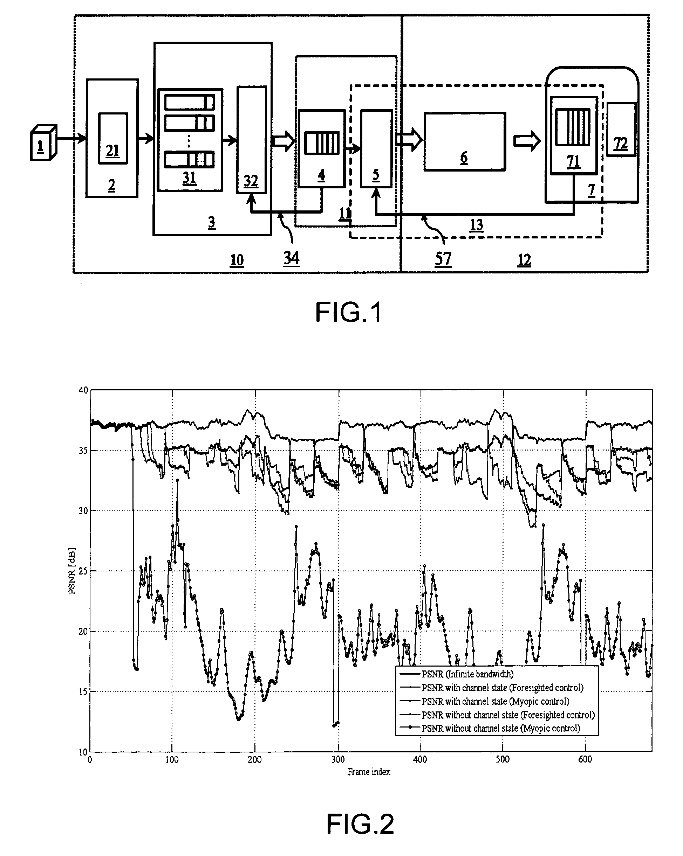

Figure 1 illustrates the streaming of a video sequence **1** to a mobile (or wireless) station **7** connected to a wireless network **12.**

The video sequence **1** may come from different sources such as a storage device, (a database, a multimedia server, a video server for example), or a live camera feed.

The mobile station **7** is any user equipment able to receive and play a multimedia streaming. A smart-phone, a tablet, a computer, a Personal Digital Assistant (PDA), a laptop are non-limitative examples of such mobile station **7.**

The wireless network **12** may be a wireless IP network, a Wireless Personal Area Network, a Wireless Local Area Network, a Wireless Metropolitan Area Network, a Wireless Wide Area Networks, or more generally any Mobile devices network which may result from the combination of more than one wireless network.

More generally, the video sequence **1** is routed to the mobile station **7** via a wired network **10** that includes

- a streaming server **2** provided with a scalable video encoder **21** (a Fine Granularity Scalability (FSG) coding or an Advanced Video Coding AVC for example);
- a proxy **3,** generally located at the edge of the wired network **10;** and
- an access point **11** (i.e. a base station which may be designated differently depending on the deployed communication technology such as Node B for 3G, or eNode-B for LTE), generally co-located with the proxy **3.**

Within the streaming server **2,** the video sequence **1** is segmented into frames encoded into

- a base layer and a set of $L$-1 enhancement layers, in case of H264 SVC; and
- intra and inter frames in case of H264 AVC.

Persons skilled in the art will readily realize that, in case of H264 AVC wherein there are two kinds of inter-frames (predicted frame, commonly denoted $P$, and the $Bi$ predicted frame, commonly denoted $B$), the number of $L$ is equal to 2. Further, H264 AVC may be seen as a particular case of H264 SVC wherein the used scalability is the temporal scalability. Accordingly, hereafter and for the sake of generality, the notation of $L$, and the term of H264 SVC are used.

In the case of a H.264 SVC scalability scheme, Access Units (AU) are the basic processing units, macroblock(s), slices, or frame(s), consisting of the base layer and its corresponding enhancement layers.

Encoding parameters (quantization steps, frame rate and the likes) are controlled by the streaming server **2,** independently of the remainder of the transmission chain. Each scalable layer of each encoded frame is packetized (for example into RTP, UDP, or IP packets), then are delivered via an over-provisioned core network **10** to $L$ post-encoder buffers **31** (one per layer) situated in the proxy **3.** The controller **32** performs layer filtering within the proxy **3:** for each layer, packets may be sent, kept, or dropped.

Sent packets are fed to the MAC buffer **4** (or more generally to a buffer **4** of lower layer) in the access point **11** after being segmented into Packet Data Units (PDUs). PDUs are then transmitted to the mobile station **7,** which stores correctly received PDUs in its own MAC buffer **71.** Packet deencapsulation and buffering in one of the $L$ buffers **71** at application layer of the mobile station **7** are done as soon as all corresponding PDUs have been received. Complete or incomplete AUs are then processed by the video decoder **72** of the mobile station **7.** Outdated packets are dropped, without being decoded.

Among the components of the access point **11,** a particular attention is paid to its MAC (or lower layer) buffer **4.** Then to make it apparent, the remainder components of this access point **11** (the MAC scheduler **5,** the physical layer, the radio front-end for example) are assumed to be belonging to the channel **13.** This channel **13** further comprises the wireless channel **6,** the physical layer of the mobile station **7,** and the MAC buffer **71** (i.e. the MAC layer managing ACK/NACK procedures) of the mobile station **7**.

The MAC buffer **4** of the access point **11** sends feedback (link 34 on figure 1) its buffer states to the controller **32** of the proxy **3.**

Based on only the reported feedbacks from the MAC buffer **4** of the access point **11,** a scalable layer filtering process, operated by the controller **32** of the proxy **3,** is designed in such a way that

- the overflow of the MAC buffer **4** is avoided, in order to prevent PDUs from being dropped;
- the underflow of the MAC buffer **4** is also avoided so as to use the channel in an optimal and efficient way;
- the overflow of the post-encoder buffers **31** is avoided to limit the delay introduced by the system;
- the underflow of the post-encoder buffers **31** is also avoided, especially at the base layer, since this indicates that too much importance has been given to the base layer compared to the other layers.

Accordingly, without any additional observation on the channel **13** state, the controller **32** has to perform a scalable layer filtering (noting that some scalability layers may be dropped) using only observations made on the MAC buffer **4.** Alternatively or in combination, other observation points, instead of MAC buffer **4,** such as RLC buffer or PDPC buffer may be adopted.

In other words, by observing only the evolution of fullness of the last buffer in the path before the wireless channel **12,** namely the MAC buffer **4,** it is possible for the controller **32** of the proxy **3** to decide on which packet/layer to transmit. That is to say, the controller **3** performs a video packet scheduling algorithm without RTCP feedback messages from the wireless station **7** to the proxy **3.** Only feedback provided by the ACK/NACK may be exploited to derive the state of the channel (link **57** on figure 1).

These above items are achieved through the resolution of an optimisation problem formulated in the framework of a discrete-time Markov Decision Process (MDP).

Thus, the design of an efficient layer filtering process is translated in the framework of discrete-time MDP (R.S Sutton and A.G Barto, Reinforcement Learning: An Introduction, MIT Press, 1998). In fact, an MDP of 4-tuple ($S,A,P,R$) is defined, and wherein

- $S$ is the set of states of the system;
- $A$ is the set of actions;
- $P(s,s',a)$ is the transition probability from $s \in S$ at time $t$, to $s' \in S$ at time $t + 1$, when the action $a \in A$ is applied to the system; and
- $R(s,s',a)$ indicates the immediate reward (or expected immediate reward) received after a transition from $s$ to $s'$ obtained by using the action $a$.

Some policy $\pi(s) \in A$, $s \in S$ maximizing the immediate reward (myopic policy) or a discounted sum of future rewards (foresighted policy) has then to be found.

The state of the controlled system consists of gathering

- the levels $s_m^l$, $l =, ..., L$ of the post-encoder buffers **31**;
- $s_m$ corresponding to the level of the MAC buffer **4** in the base station **11**; and
- $h$ representing the channel state.

The state of the system is thus $s = (s_l^e, s^m, h).$

The channel is modeled by a first-order Markov process with $n$ states, with known transition probability $p(h_{t+1}|h_t)$ and stationary probability $p(h_t)$. $h_t$ can represent for example the rate available during the considered time slot. Tow hypotheses concerning the knowledge of the state of the channel are considered:

- Hyp.1: instantaneous channel state, where $ht$ is assumed available when choosing the action to apply between time $t$ and $t + 1$; this is realistic only when feedback with very short delay is possible;
- Hyp.2: unknown channel state which is a scenario where no channel state feedback is considered.

With regard to action $a$, the proxy **3** may, and time $t$, send, hold, or drop packets for each layer $l$. The action $a_{l,t} \in A$ taken for the $\ell^{th}$ layer between time $t$ and $t + 1$ represents the number of transmitted packets from the post-encoder buffer **31** to the MAC buffer **4** (when $a_{l,t} > 0$), or the number of dropped packets (when $a_{l,t} < 0$). If $a_{l,t} = 0$, packets are kept in the post-encoder buffer **31**. The vector gathering all actions is $a = (a1, ... , aL) \in AL$.

Once all states $S$ and actions $A$ have been identified, one has to determine the transition probability matrix $P(s,s',a)$. To that end, two cases are distinguished as follows:

- case 1 (Hyp.1): the channel state $h_t$ is available to the controller **32** when applying the action $a$ in state $s$ at time $t$. The state transition matrix is then

$$P1(s_t, s_{t+1}, a_t) = Pr\ (s_{t+1}^e, s^m, h_{t+1} | s_t^e, s^m, h_t, a_t) \qquad (1)$$

which may be easily evaluated using the fact that $p(h_{t+1}|h_t)$ is known. $s_t^e$ is the vector of all post encoder buffer **31** states, and $a_t$ is the vector of all action

- case 2 (Hyp.1): no channel state $h_t$ is available to the controller **32**. The state transition matrix may then be written as

$$P1(s_t, s_{t+1}, a_t) = \Pr(s_{t+1}^e, s^m | s_t^e, s^m, a_t) = \sum_{h_t} \sum_{h_{t+1}} \Pr\ (s_{t+1}^e, s^m, h_{t+1} | s_t^e, s^m, h_t, a_t).\Pr(h_t) \quad (2)$$

since $s_t^e$ (vector of all post encoder buffers **31**), $s_t^m$, or $a_t$ (vector of all action) do not provide additional information on $h_t$.

In order to limit the size of these transition matrices $P1(s_t, s_{t+1}, a_t)$, one can quantize the values that may be taken by the states $S$ in a more or less coarse way to get a compromise between complexity and description accuracy.

Concerning the reward function $R(s,s',a)$ at time $t$, the layer filtering process (i.e. the scheduling algorithm), performed by the controller **31**, chooses an action that maximizes the QoS (notably, the video quality) at the receiver side (i.e. at the mobile station **7**). To that end, the average Peak Signal to Noise Ratio (PSNR) of the decoded frames is maximized.

In order to avoid the variability of the delay between the time at which an AU is filtered and the time at which it is displayed, an alternative reward function $R(s,s',a)$, that penalize dropped packets, as well as buffer overflow and underflow according to the system constraints, is built. This reward function is expressed as follows:

$$R_t(s_t, s_{t+1}, a_t) = E\left[\sum_{l=1}^{L} \gamma_l a_{l,t} + \sum_{l=1}^{L} \alpha_l \rho_1\left(s_{l,t+1}^e, a_{l,t}\right) + \beta \rho_2\left(s_{t+1}^m, a_{l,t}\right)\right] \qquad (3)$$

Where E[.] denotes the expectation function.

The positive parameters $\gamma_l$, $\alpha_l$, and $\beta_l$, with $\ell = 1...L$, trade off the importance of the various constraints. The reward function (3) involves several parts; the first linked to the number of transmitted SNR layers, the others to the post-encoder buffers **31** and the MAC buffer **4** constraints. The reward function (3) is function of the state of the post-encoder-buffers **31** and the state of the MAC buffer **4**.

Assuming that increasing the amount of transmitted packets increases the received quality, the transmission reward should help to maximize the amount of transmitted packets.

The parameters $\gamma_l$ allow giving a higher priority to packets belonging to the base layer compared to those of the enhancement layers. For post-encoder buffers **31** and MAC buffer **4** constraints, $\rho1(.)$ and $\rho2(.)$ provide positive rewards for satisfying buffer states and negative rewards for states that should be avoided.

The policy n, as a mapping from joint states to joint actions in the considered system, indicates the number of scalable layers to transmit, knowing the state of the post-encoder buffers **31** and of the MAC buffer **4**.

The optimal foresighted policy consists in finding the optimal stationary Markov policy $\pi^*$ corresponding to the optimal state-value function defined as

$$V^*(s_t) = \max_a \sum_{k=0}^{\infty} \alpha^k R_{t+k+1} | s_t \qquad (4)$$

where $0 < \alpha < 1$ is the discount factor, which defines the relative importance of present and future rewards. The optimal foresighted policy may be obtained by value or policy iteration algorithms (R.S Sutton and A.G Barto, Reinforcement Learning: An Introduction, MIT Press, 1998). The value in (4) is updated and iterated for all states $s$ until it converges with the left-hand side equal to the right-hand side (which is the Bellman equation for this problem). When $\alpha$ = 0, one gets a myopic policy, maximizing only the immediate reward.

Accordingly, the proposed algorithm controls the level of buffers **4** at MAC (link **34** on figure 1) and at Application layers (link **57** on figure 1) at the transmitter side only of a communication chain. Feedback at MAC layer is implicitly used, but no applicative feedback (i.e. at the application layer) from the mobile user is considered, avoiding the use of delayed measurements.

The proposed algorithm performs packet scheduling and jointly buffer management in both Application and MAC layers at the transmitter side according to a cross-layer control mechanism.

The controller **32** retrieves information concerning the MAC buffer **4**, solves the above MDP optimization problem, and then derives updated operational parameters for the physical and application layers.

The use of the optimized parameters permits to

- maximize the number of transmitted layers of the video content **1**;
- avoid underflow and overflow state in the MAC buffer **4**;
- avoid underflow and overflow state in the post encoder buffers **71**;
- consider the buffer fullness at a frame packet level; and consequently
- achieve reliable communication, and maximise the QoS at the mobile station **7** side.

Accordingly, the proposed method permits to

- increase the spectral efficiency of the uplink channel in the wireless network (no applicative feedback);
- filter packet in a blind way, no need to have an applicative feedback,
- improve the quality of service of the end-user ;
- maintain a certain playback margin to the end-user by prioritizing the base layers/packets.

The proposed method is a scheduling algorithm for AVC or SVC video streaming in order to have a quality aware adaptive and selective frame/packet transmission.

The performance of the proposed layer filtering process has been evaluated on several video sequences.

Figure 2 shows the Peak Signal-to-Noise Ratio (PSNR) behavior versus time for simulation with and without adaptation by controller **32**. Video quality is then measured in terms of PSNR to estimate the streaming performance in terms of adaptation gain.

As illustration of the gain achievable with the disclosed method, figure 2 reports the results obtained for the video sequence "*Foreman.Qcif*" at 30 fps. The H.264 SVC encoder is using $L$ = 3SNR scalability layers per frame.

Five curves are plotted on figure 2. These curves represent, respectively from the bottom to the top of the figure 2, the evolution (in dB) over time (Frame index) of PSNR without channel state (Myopic control), of PSNR without channel state (Foresighted control), of PSNR with channel state (Myopic control), of PSNR with channel state (Foresighted control), and of PSNR with infinite bandwidth.

The settings used in this illustrative example are:

- the cumulated average rates (and PSNR for luminance) are

    ◦ 74.7 *kbits/s* (32.3 *dB*) for Layer 1;
    ◦ 165.0 *kbits/s* (34.7 *dB*) for Layer 1 and 2; and
    ◦ 327.0 *kbits/s* (36.82 *dB*) for all layers.

- the wireless channel is modelled as a 2-state Markov model ($n$ = 2): Good state $h_t$ = 1 and bad state $h_t$ = 0. The channel rates are $Rc$ = 240 *Kbit/s*. The channel state transition probabilities are $p11$ = 0.9 and $p00$ = 0.8, resulting in an average channel rate of 190 *kbits/s*. Four possible actions per layer are considered at each time instant $A$ = {-1, 0, 1, 2}
- to minimize complexity, the levels of all buffers are quantized into three possible values: 1 representing underflow, 2 for a satisfying level, and 3 for overflow;
- the post-encoder buffers **31** are assumed to have a maximum size (in term of number of packets) $Se$ = 55; the over and underflow levels are $Se_{max}$ = 50 and $Se_{min}$ = 10. For the MAC buffer **4**, a maximum size of $Sm$ = 220 equal size PDU of 200 *bits* each corresponding to a maximum size of 44 *kbits*, and the levels at which it is considered in underflow and overflow are $Sm_{min}$ = 10 *Kbits* and $Sm_{max}$ = 25 *kbits*;
- the values of the parameters in the reward function (equation 3), have been set to reflect the importance of the

various constraints: $\gamma_{1,2,3}$ = {150, 60, 15}, $\lambda_{1,2,3}$ = {100, 40, 10} and $\beta$ = 300.

Known average source and encoder characteristics have been considered, leading to known average packet lengths in each layers.

In the two considered above cases, the evolution of the PSNR of the decoded sequence obtained with a myopic policy ($\alpha$ = 0) and that with a foresighted policy ($\alpha$ = 0.9) are represented in Figure 2.

When the applicative feedback is used, an average gain of about 1.5 dB is obtained with the foresighted policy compared to the myopic one. This gain is mainly due to more packets of the first enhancement layer reaching the receiver.

In the case of the using no applicative feedback (the target of the embodiment), with the myopic policy, about 46 % of the time, the MAC buffer **4** is in the overflow state exceeding some time the maximum buffer size. This situation results in the loss of some PDUs which induces a notable decrease of the received video quality. With the foresighted policy, the MAC buffer is in overflow state for about 25%of the time but never loses PDU packets.

Without applicative feedback and using the foresighted policy results in a loss of 0.5 dB in PSNR compared to the case of deploying an applicative feedback strategy. The availability of the state of the MAC buffer **4** provides thus a reasonable estimate of the state of the channel, allowing a satisfying regulation of the received video quality.

Accordingly, the maximum PSNR is obtained when the disclosed method is introduced, and particularly, in this example, for frames after the 50th.

It is noteworthy to mention that the above described method addresses conventional codecs, known for the skilled person in the art, such as H264 AVC, H264/SVC, any further version of them, or any equivalent codec.

The above-described method fits well to multimedia streaming over wireless networks due to frequent channel changes that lead to considerably reduced packet loss rates, especially under heavy traffic conditions.

Others QoS features (intServ/DiffServ for example) and congestion control mechanisms, especially designed for multimedia data transmission in wired networks, may be combined with the herein described method.

## Claims

1. A video packets scheduling method for multimedia streaming toward a receiver (7) provided with a video decoder (72), via a transmission chain including an access point (11) and a proxy (3), said proxy (3) provided with post-encoder buffers (31) and with a controller (32), said access point (11) provided with a buffer (4) of lower layer, said method comprising a resolution step of an optimisation problem formulated in the framework of a discrete time Markov Decision Process, wherein the reward function of the Markov Decision Process is only a function of the state of the buffer (4) in the access point (11) and the state of the post-encoder buffers (31) in the proxy (3).

2. The method of claim 1, wherein the reward function of the Markov Decision Process is as follows:

$$R_t(s_t, s_{t+1}, a_t) = E\left[\sum_{l=1}^{L} \gamma_l a_{l,t} + \sum_{l=1}^{L} \alpha_l \rho_1\left(s_{l,t+1}^e, a_{l,t}\right) + \beta \rho_2\left(s_{t+1}^m, a_{l,t}\right)\right]$$

$R_t(s_t, s_{t+1}, a_t)$ being the reward at time $t$ received after a transition from a state $s_t$ of the Markov Decision Process to a state $s_{t+1}$ obtained by using an action $a_t$, E[.] denoting an expectation function, the positive parameters $\gamma_1$, $\alpha_1$, and $\beta_1$, with $l$ = 1...$L$, trading off the importance of the various constraints relative to buffer (4) in the access point (11) and to post-encoder buffers (31) in the proxy (3), $\rho_1(.)$ and $\rho_2(.)$ providing positive rewards for satisfying buffer states and negative rewards for states to be avoided, $s_{l,t+1}^e$ indicating levels of the encoder buffers (31) for layers $l$ = 1...$L$, $s_{t+1}^m$ indicating a level of the buffer (4) and $a_{l,t}$ indicating actions taken for the layer $l$ between time $t$ and time $t$ + 1.

3. A controller (32) for a proxy (3); wherein the controller (32) is for video packets scheduling from post-encoder buffers (31) of the proxy (3) to a buffer (4) of lower layer in an access point (11), said video packets to be streamed to a receiver (7) provided with a video decoder (72), said controller programmed for solving an optimization problem formulated in the framework of a discrete time Markov Decision Process, wherein the reward function of the Markov Decision Process is only a function of the state of the buffer (4) in the access point (11) and the state of the post-encoder buffers (31) in the proxy (3).

4. The controller of claim 3, wherein the reward function of the Markov Decision Process is as follows:

$$R_t(s_t, s_{t+1}, a_t) = E\left[\sum_{l=1}^{L} \gamma_l a_{l,t} + \sum_{l=1}^{L} \alpha_l \rho_1\left(s_{l,t+1}^e, a_{l,t}\right) + \beta \rho_2\left(s_{t+1}^m, a_{l,t}\right)\right]$$

Rt(st, st+1, at) being the reward at time t received after a transition from a state st of the Markov Decision Process to a state st+1 obtained by using an action at, E[.] denoting an expectation function, the positive parameters yl, al, and $\beta$1, with l = 1 ... L, trading off the importance of the various constraints relative to buffer (4) in the access point (11) and to post-encoder buffers (31) in the proxy (3), p1(.) and p2(.) providing positive rewards for satisfying buffer states and negative rewards for states to be avoided, sel, t+1 indicating levels of the encoder buffers (31) for layers l = 1 ...L, smt+1 indicating a level of the buffer (4) and $\alpha$l,t indicating actions taken for the layer l between time t and time t + 1.

5. A computer program product including instructions which, when executed on a computer and/or a dedicated system, cause the computer and/or the dedicated system to perform all the steps of a method as claimed in preceding claims 1 to 2.

**Patentansprüche**

1. Verfahren zur Ablaufplanung von Videopaketen für Multimedia-Streaming an einen mit einem Video-Decoder (72) versehenen Empfänger (7) über eine Übertragungskette, welche einen Zugangspunkt (11) und einen Proxy (3) einschließt, wobei der besagte Proxy (3) mit Nachcodier-Puffern (31) und mit einem Controller (32) versehen ist, wobei der besagte Zugangspunkt (11) mit einem Pufferspeicher (4) einer niedrigeren Schicht versehen ist, wobei das besagte Verfahren einen Schritt der Lösung eines in dem Rahmenwerk eines zeitdiskreten Markovschen Entscheidungsprozesses formulierten Optimierungsproblems umfasst, wobei die Belohnungsfunktion des Markovschen Entscheidungsprozesses lediglich eine Funktion des Zustands des Pufferspeichers (4) in dem Zugangspunkt (11) und des Zustands des Nachcodier-Puffers (31) im Proxy (3) ist.

2. Verfahren nach Anspruch 1, wobei die Belohnungsfunktion des Markovschen Entscheidungsprozesses wie folgt lautet:

$$R_t(s_t, s_{t+1}, a_t) = E\left[\sum_{l=1}^{L} \gamma_l a_{l,t} + \sum_{l=1}^{L} \alpha_l \rho_1\left(s_{l,t+1}^e, a_{l,t}\right) + \beta \rho_2\left(s_{t+1}^m, a_{l,t}\right)\right]$$

wobei $R_t(s_t, s_{t+1}, a_t)$ die Belohnung zum Zeitpunkt $t$, welche nach dem Übergang von einem Zustand $s_t$ des Markovschen Entscheidungsprozesses zu einem Zustand $s_{t+1}$, welcher unter Verwendung einer Aktion $a_t$, E[.], die eine Erwartungsfunktion bezeichnet, erreicht wird, darstellt, wobei die positiven Parameter $\gamma_1$, $\alpha_1$ und $\beta_1$ mit $l = 1...L$ die Bedeutung der verschiedenen Einschränkungen in Bezug auf den Pufferspeicher (4) in dem Zugangspunkt (11) und auf Nachcodier-Puffer (31) im Proxy (3) ausgleicht, $\rho_1(.)$ und $\rho_2(.)$ positive Belohnungen zur Erfüllung von Pufferspeicherzuständen und negative Belohnungen für zu vermeidende Zustände darstellen, $s_{l,t+1}^e$ Füllstände der Codierpuffer (31) für Schichten $l = 1 ... L$ darstellt, $s_{t+1}^m$ einen Füllstand des Pufferspeichers (4) darstellt und $\alpha_{l,t}$ für die Schicht $l$ die zwischen dem Zeitpunkt $t$ und dem Zeitpunkt $t$+1 vorgenommenen Aktionen darstellt.

**3.** Controller (32) für einen Proxy (3); wobei der Controller (32) für die Ablaufplanung von Videopaketen von Nachcodier-Puffern (31) des Proxys (3) an einen Speicherpuffer (4) einer niedrigeren Schicht in einem Zugangspunkt (11) bestimmt ist, wobei die besagten Videopakete an einen mit einem Video-Decodierer (72) versehenen Empfänger (7) gestreamt werden, wobei der besagte Controller für das Lösen eines in dem Rahmenwerk eines zeitdiskreten Markovschen Entscheidungsprozess formulierten Optimierungsproblems programmiert ist, wobei die Belohnungsfunktion des Markovschen Entscheidungsprozess lediglich eine Funktion des Zustands des Pufferspeichers (4) in dem Zugangspunkt (11) und des Zustands des Nachcodier-Puffers (31) in dem Proxy (3) ist.

**4.** Controller nach Anspruch 3, wobei die Belohnungsfunktion des Markovschen Entscheidungsprozesses wie folgt lautet:

$$R_t(s_t, s_{t+1}, a_t) = E\left[\sum_{l=1}^{L} \gamma_l a_{l,t} + \sum_{l=1}^{L} \alpha_l \rho_1\big(s_{l,t+1}^e, a_{l,t}\big) + \beta \rho_2\big(s_{t+1}^m, a_{l,t}\big)\right]$$

wobei $R_t(s_t, s_{t+1}, a_t)$ die Belohnung zum Zeitpunkt $t$, welche nach dem Übergang von einem Zustand $s_t$ des Markovschen Entscheidungsprozesses zu einem Zustand $S_{t+1}$, welcher unter Verwendung einer Aktion $a_t$, E[.], die eine Erwartungsfunktion bezeichnet, erreicht wird, darstellt, wobei die positiven Parameter $\gamma_1$, $\alpha_1$ und $\beta_1$ mit $l = 1...L$ die Bedeutung der verschiedenen Einschränkungen in Bezug auf den Pufferspeicher (4) in dem Zugangspunkt (11) und auf Nachcodier-Puffer (31) im Proxy (3) ausgleicht, $\rho_1(.)$ und $\rho_2(.)$ positive Belohnungen zur Verfüllung von Pufferspeicherzuständen und negative Belohnungen für zu vermeidende Zustände darstellen, $s_{l,t+1}^e$ Füllstände der Codierpuffer (31) für Schichten $l = 1...L$ darstellt, $s_{t+1}^m$ einen Füllstand des Pufferspeichers (4) darstellt und $a_{l,t}$ für die Schicht $l$ die zwischen dem Zeitpunkt und dem Zeitpunkt $t+1$ vorgenommenen Aktionen darstellt.

**5.** Computerprogramm-Produkt mit Befehlen, welche bei der Ausführung auf einem Computer und/oder einem dedizierten System bewirken, dass der Computer und/oder das dedizierte System alle Schritte eines Verfahrens gemäß den vorstehenden Ansprüchen 1 bis 2 durchführt.

**Revendications**

**1.** Procédé de programmation temporelle de paquets vidéo pour une diffusion multimédia en continu vers un récepteur (7) équipé d'un décodeur vidéo (72), par l'intermédiaire d'une chaîne de transmission comprenant un point d'accès (11) et un mandataire (3), ledit mandataire (3) étant équipé de tampons de post-codeurs (31) et d'un contrôleur (32), ledit point d'accès (11) étant équipé d'un tampon (4) de couche inférieure, ledit procédé comprenant une étape de résolution d'un problème d'optimisation formulé dans le cadre d'un processus de décision de Markov à temps discret, dans lequel la fonction de récompense du processus de décision de Markov est seulement une fonction de l'état du tampon (4) dans le point d'accès (11) et de l'état des tampons de post-codeurs (31) dans le mandataire (3).

**2.** Procédé selon la revendication 1, dans lequel la fonction de récompense du processus de décision de Markov est comme suit :

$$R_t(s_t, s_{t+1}, a_t) = E\left[\sum_{l=1}^{L} \gamma_l a_{l,t} + \sum_{l=1}^{L} \alpha_l \rho_1\big(s_{l,t+1}^e, a_{l,t}\big) + \beta \rho_2\big(s_{t+1}^m, a_{l,t}\big)\right]$$

$R_t(s_t, s_{t+1}, a_t)$ étant la récompense au temps $t$ reçue après une transition entre un état $s_t$ du processus de décision de Markov et un état $s_{t+1}$ obtenu en utilisant une action $a_t$, E[.] indiquant une fonction d'attente, les paramètres positifs $\gamma_l$, $\alpha_l$, et $\beta_l$, avec $l$ = 1 ... $L$, échangeant l'importance des différentes contraintes par rapport au tampon (4) dans le point d'accès (11) et aux tampons de post-codeurs (31) dans le mandataire (3), $p_1(.)$ et $p_2(.)$ fournissant des récompenses positives pour satisfaire des états de tampon et des récompenses négatives pour des états à éviter, $s^e_{l,t+1}$ indiquant des niveaux des tampons de codeurs (31) pour des couches $l$ = 1 ... $L$, $s^m_{t+1}$ indiquant un niveau du tampon (4) et $a_{l,t}$ indiquant des actions réalisées pour la couche $l$ entre le temps $t$ et le temps $t$ + 1.

3. Dispositif de commande (32) pour un mandataire (3) ; le dispositif de commande (32) servant à la planification de paquets vidéo entre des tampons de post-codeurs (31) du mandataire (3) et un tampon (4) d'une couche inférieure dans un point d'accès (11), lesdits paquets vidéo devant être diffusés en continu vers un récepteur (7) équipé d'un décodeur vidéo (72), ledit dispositif de commande étant programmé pour résoudre un problème d'optimisation formulé dans le cadre d'un processus de décision de Markov à temps discret, dans lequel la fonction de récompense du processus de décision de Markov est seulement une fonction de l'état du tampon (4) dans le point d'accès (11) et de l'état des tampons de post-codeurs (31) dans le mandataire (3).

4. Dispositif de commande selon la revendication 3, dans lequel la fonction de récompense du processus de décision de Markov est comme suit :

$$R_t(s_t, s_{t+1}, a_t) = E\left[\sum_{l=1}^{L} \gamma_l a_{l,t} + \sum_{l=1}^{L} \alpha_l \rho_1(s^e_{l,t+1}, a_{l,t}) + \beta \rho_2(s^m_{t+1}, a_{l,t})\right]$$

Rt(st, st+1, at) étant la récompense au temps t reçue après une transition entre un état st du processus de décision de Markov et un état st+1 obtenu en utilisant une action at, E[.] indiquant une fonction d'attente, les paramètres positifs yl, al et β1, avec l = 1 ... L, échangeant l'importance des différentes contraintes par rapport au tampon (4) dans le point d'accès (11) et aux tampons de post-codeurs (31) dans le mandataire (3), p1(.) et p2(.) fournissant des récompenses positives pour satisfaire des états de tampon et des récompenses négatives pour des états à éviter, sel, t+1 indiquant des niveaux des tampons de codeurs (31) pour des couches l = 1 ... L, smt+1 indiquant un niveau du tampon (4) et αl,t indiquant des actions réalisées pour la couche l entre le temps t et le temps t + 1.

5. Produit de programme informatique comprenant des instructions qui, lorsqu'elles sont exécutées sur un ordinateur et/ou un système dédié, entraînent l'exécution par l'ordinateur et/ou le système dédié de toutes les étapes d'un procédé selon les revendications précédentes 1 et 2.

FIG.1

FIG.2

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- US 2006095943 A

## Non-patent literature cited in the description

- **S. SESIA ; I. TOUFIK ; M. BAKER.** LTE, The UMTS Long Term Evolution: From Theory to Practice. February 2009
- **N. CHANGUEL ; N. MATRONARDE ; M. VA DER SCHAAR ; B. SAYADI ; M. KIEFFER.** End-to-End stochastic scheduling of scalable video overtime-varying channels. *Proceedings of MM10, International Conference on Multimedia, Florence, Italy,* 25 October 2010, 731-734
- **HARATCHEREV I et al.** Fast 802.11 link adaptation for real-time video streaming by cross-layer signaling. *Conference Proceedings / International Symposium on Circuits and Systems (ISCAS),* 23 May 2005
- **NESRINE CHANGUEL et al.** Joint encoder and Buffer Control for Statistical Multiplexing of Multimedia Contents. *Globecom 2010,* 06 December 2010, 1-6
- **R.S SUTTON ; A.G BARTO.** Reinforcement Learning: An Introduction. MIT Press, 1998